# EUROPÄISCHE PATENTSCHRIFT

(11) **EP 1 210 246 B1**
(45) Veröffentlichungstag und Bekanntmachung des Hinweises auf die Patenterteilung: **17.12.2003**
(21) Anmeldenummer: 00958393.1
(22) Anmeldetag: 08.08.2000
(51) Int. Cl.: B60N 2/02, B60N 2/36

(54) **FAHRZEUGSITZ MIT PACKAGESTELLUNG**
VEHICLE SEAT WITH A PACKAGE POSITION
SIEGE DE VEHICULE AUTOMOBILE A POSITION BASCULEE

(30) Priorität: 11.09.1999 DE 19943454
(43) Veröffentlichungstag der Anmeldung: 05.06.2002
(73) Patentinhaber: KEIPER GmbH & Co. KG, 67657 Kaiserslautern (DE)
(72) Erfinder: ELLERICH, Frank, D-67808 Bennhausen (DE); KÄMMERER, Joachim, D-67663 Kaiserslautern (DE); KUSCHMANN, Ralph, D-54317 Gusterath (DE); KUNZ, Holger, D-67697 Otterberg (DE)
(74) Vertreter: Patentanwälte Hosenthien-Held und Dr. Held
(86) Internationale Anmeldenummer: EP0007660
(87) Internationale Veröffentlichungsnummer: WO01019640

(56) Entgegenhaltungen:
- EP-A- 0 364 146
- EP-A- 0 622 268
- DE-C- 19 607 060
- FR-A- 2 589 800
- US-A- 5 158 338
- US-A- 5 195 795
- US-A- 5 482 349
- US-A- 6 079 763

## Beschreibung

Die Erfindung betrifft einen Fahrzeugsitz, insbesondere eine Kraftfahrzeug-Rücksitzbank, mit den Merkmalen des Oberbegriffs des Anspruches 1.

Ein aus der US 5,195,795 A bekannter Fahrzeugsitz dieser Art kann insbesondere in einem sogenannten "Van" eingesetzt werden, um eine variable Innenraumgestaltung vornehmen zu können. Um den Stauraum hinter dem Fahrzeugsitz zu vergrößern, kann der Benutzer den Fahrzeugsitz von der Sitzstellung in die Nichtgebrauchsoder Packagestellung bringen, in welcher der Fahrzeugsitz möglichst wenig Platz verbraucht. Für den Übergang in die vorliegend versenkte Packagestellung sind mit mehreren Handgriffen verschiedene Teile des Fahrzeugsitzes zusammenzuklappen, wobei der als starre Verlängerung der Struktur der Lehne ausgebildete hintere Fuß samt Lehne nach vorne schwenkt. Bei Fahrzeugsitzen mit aufrechten Packagestellungen ist es zudem bekannt, den Fahrzeugsitz aus Bolzen der Fahrzeugstruktur auszuklinken oder aus einer Schienenführung zu schoben, um ihn vollständig aus dem Kraftfahrzeug zu entfernen.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der abhängigen Ansprüche.

Dadurch, daß die Lehne mittels eines zweiten Viergelenks am hinteren Fuß des Sitzgestells angelenkt ist und der hintere Fuß einen Bestandteil beider Viergelenke bildet, kann durch einen einzigen Handgriff der hintere Fuß bewegt, vorzugsweise geschwenkt, werden, wodurch sich der gesamte Fahrzeugsitz - je nach Schwenkrichtung - in die Packagestellung oder in die Sitzstellung bewegt. Aufgrund der beiden Viergelenke können Polsterträger und Lehne unterschiedlich bewegt werden. Die Bedienung mit nur einem Handgriff ist im Vergleich zu Konstruktionen, die nur mit mehreren Handgriffen in die Packagestellung überführt werden können, erheblich leichter und verringert sich die Gefahr, daß durch eine Fehlbedienung der Fahrzeugsitz beschädigt wird.

Die Bewegung des Fahrzeugsitzes kann durch eine Gasdruckfeder unterstützt werden. Die Lehne wird vorzugsweise durch das Zusammenwirken der beiden Viergelenke unter Beibehaltung ihrer Neigung nach vorne versetzt, so daß sie in der Packagestellung mit der vom Rückenlehnenpolster abgewandten Seite am Sitzpolster anliegt.

Im folgenden ist die Erfindung anhand eines in der Zeichnung dargestellten Ausführungsbeispiels näher erläutert. Es zeigen
- Fig. 1: eine schematische Seitenansicht des Ausführungsbeispiels in der Sitzstellung,

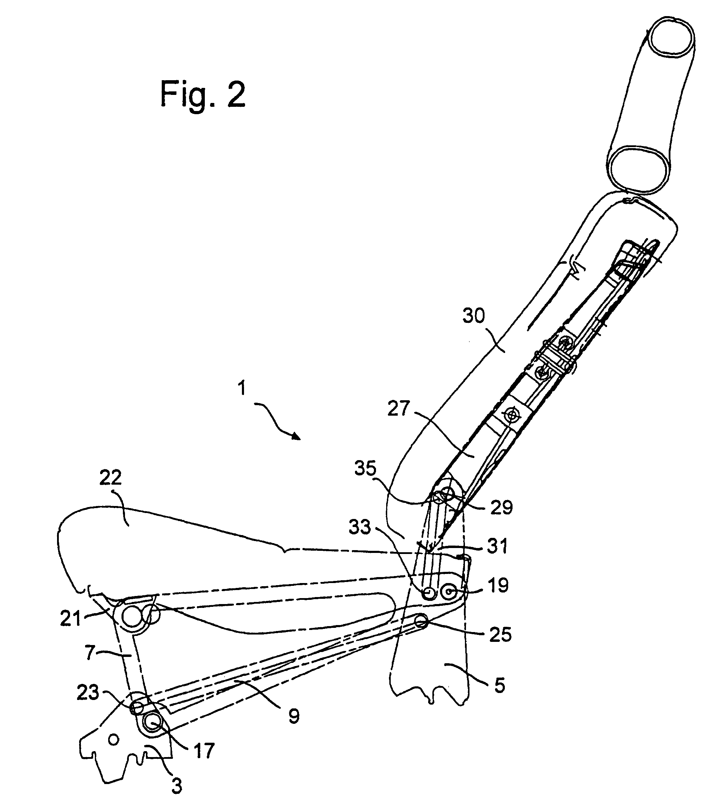

- Fig. 2: eine schematische Seitenansicht des Ausführungsbeispiels in einer ersten Zwischenstellung,

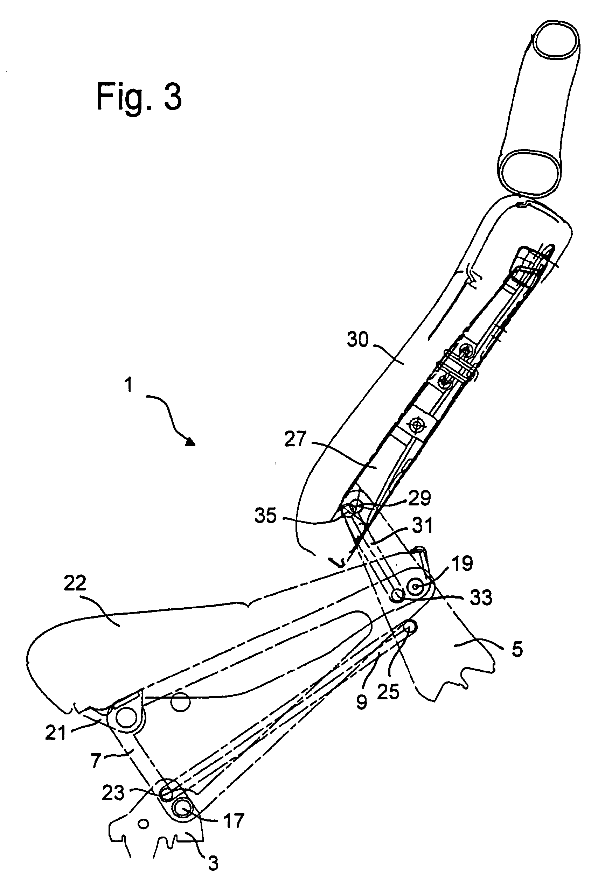

- Fig. 3: eine schematische Seitenansicht des Ausführungsbeispiels in einer zweiten Zwischenstellung.

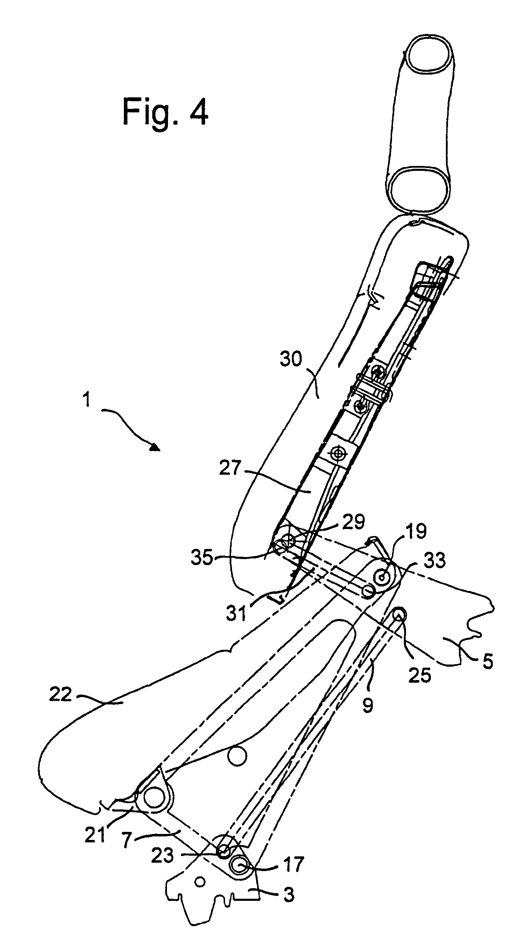

- Fig. 4: eine schematische Seitenansicht des Ausführungsbeispiels in einer dritten Zwischenstellung, und

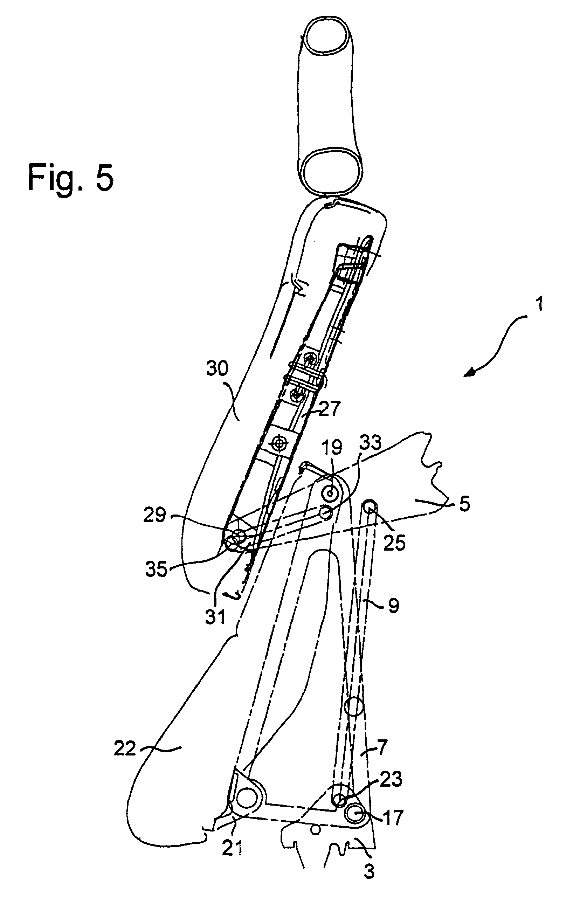

- Fig. 5: eine schematische Seitenansicht des Ausführungsbeispiels in der Packagestellung.

Im Ausführungsbeispiel ist ein Fahrzeugsitz 1 als gedrittelte Rücksitzbank für ein Kraftfahrzeug, insbesondere für einen "Van" oder einen Kleinbus. ausgebildet. Von den in Fahrtrichtung nebeneinander angeordneten Dritteln ist im folgenden das linke Drittel des Fahrzeugsitzes 1 beschrieben, wobei die verwendeten Richtungsangaben sich auf die gewöhnliche Fahrtrichtung des Kraftfahrzeuges beziehen.

Der Fahrzeugsitz 1 weist in jedem Drittel ein Sitzgestell mit einem vorderen Fuß 3, einem hinteren Fuß 5, einem Rahmenseitenteil 7 und einem Fußlenker 9 auf jeder der beiden Seiten auf. von denen im folgenden die linke Seite beschrieben ist. In der Sitzstellung des Fahrzeugsitzes 1 ist der vordere Fuß 3 an einem vorderen Befestigungsbolzen 13 der Fahrzeugstruktur eingeklinkt, wobei er vorzugsweise wieder lösbar ist. Der hintere Fuß 5 ist an einem hinteren Befestigungsbolzen 15 der Fahrzeugstruktur lösbar eingeklinkt. Das Rahmenseitenteil 7 weist eine dreieckige Grundform auf und ist an der vorderen unteren Ecke mittels eines ersten vorderen Bolzens 17 am vorderen Fuß 3 angelenkt. An seiner hinteren Ecke ist das Rahmenseitenteil 7 mittels eines ersten hinteren Bolzens 19 am hinteren Fuß 5 angelenkt. Ferner ist ein Polsterträger 21 ebenfalls an diesem ersten Bolzen 19 befestigt. Der Polsterträger 21 ist auch an der vorderen oberen Ecke des Rahmenseitenteils 7 angebracht und erstreckt sich zwischen den beiden Seiten des Drittels des Fahrzeugsitzes 1. Der Polsterträger 21, beispielsweise eine Sitzschale aus Kunststoff, trägt ein Sitzpolster 22. Der längliche Fußlenker 9 ist an seinem vorderen Ende mittels eines zweiten vorderen Bolzens 23 am vorderen Fuß 3 angelenkt und an seinem hinteren Ende mittels eines zweiten hinteren Bolzens 25 am hinteren Fuß 5 angelenkt.

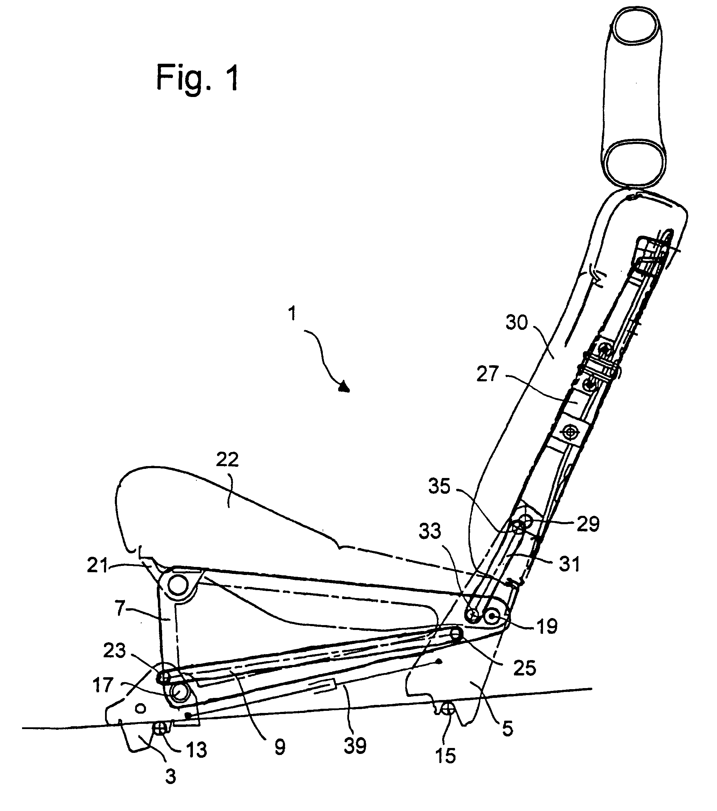

Eine Lehne 27 ist auf beiden Seiten des Drittels des Fahrzeugsitzes 1 mittels eines Lehnenbolzens 29 schwenkbar an den hinteren Füßen 5 angelenkt. Die Lehne 27 trägt ein Rückenlehnenpolster 30. Ein länglicher Lehnenlenker 31 ist mit einem dritten hinteren Bolzen 33 am Rahmenseitenteil 7 und mit einem oberen Bolzen 35 an der Lehne 27 angelenkt. Vorzugsweise ist noch eine Gasdruckfeder 39 zwischen dem vorderen Fuß 3 und dem hinteren Fuß 5 eingespannt, die ungefähr parallel zu dem Fußlenker 9 angeordnet ist. Der Übersichtlichkeit halber ist diese Gasdruckfeder 39 nur in Fig. 1 schematisch dargestellt. Der hintere Fuß 5 ist vom hinteren Befestigungsbolzen 15 aus etwas nach hinten geneigt. Für einen Crashfall sind die beschriebenen Bauteile so ausgelegt, daß die beiden Lenker 9 und 31 nahezu keine Crashkräfte übertragen müssen.

Zur Vergrößerung der Ladefläche des Kraftfahrzeuges kann der Fahrzeugsitz 1 in eine Packagestellung überführt werden. Hierzu betätigt der Benutzer mit einem einzigen Handgriff zunächst ein nicht näher dargestelltes Bedienelement. mit dem der hintere Fuß 5 aus dem hinteren Befestigungsbolzen 15 ausgeklinkt wird. Der vordere Fuß 3, das Rahmenseitenteil 7, der hintere Fuß 5 und der Fußlenker 9 bilden ein erstes Viergelenk, dessen Ecken durch den ersten vorderen Bolzen 17, den ersten hinteren Bolzen 19, den zweiten hinteren Bolzen 25 und den zweiten vorderen Bolzen 23 definiert sind und nicht zusammenfallen. Durch das Ausklinken des hinteren Fußes 5 dehnt sich die Gasdruckfeder 39 aus und drückt den hinteren Fuß 5 an seinem unteren Ende nach hinten. Sofern keine Gasdruckfeder 39 vorhanden ist, zieht der Benutzer mit demselben Handgriff, mit dem er den hinteren Fuß 5 ausklinkt, zugleich den hinteren Fuß 5 an seinem unteren Ende nach hinten. Durch die Kraftübertragung im ersten Viergelenk geht die Bewegung des hinteren Fußes 5 in eine Schwenkbewegung über, die in der Zeichnung im Gegenuhrzeigersinn verläuft. Gleichzeitig wird der hintere Fuß 5 durch das erste Viergelenk angehoben, so daß der Polsterträger 21 samt Rahmenseitenteil 7 um den ersten vorderen Bolzen 17 nach vorne schwenkt, also in der Zeichnung ebenfalls im Gegenuhrzeigersinn.

Der hintere Fuß 5, die Lehne 27, der Lehnenlenker 31 und das Rahmenseitenteil 7 bilden ein zweites Viergelenk, dessen Ecken durch den ersten hinteren Bolzen 19, den Lehnenbolzen 29. den oberen Bolzen 35 und den dritten hinteren Bolzen 33 definiert sind und nicht zusammenfallen. Durch die Schwenkbewegung des hinteren Fußes 5 wird auch das zweite Viergelenk bewegt, welches dann die Lehne 27 relativ zum hinteren Fuß 5 nach hinten schwenkt, also in der Zeichnung im Uhrzeigersinn. Die Schwenkbewegung des zweiten Viergelenks gleicht die Schwenkbewegung des ersten Viergelenks größtenteils aus. so daß die Lehne 27 ihre Neigung relativ zur Fahrzeugstruktur ungefähr beibehält. Die Lehne 27 wird aber relativ zum vorderen Fuß 3. also in Sitzlängsrichtung, nach vorne versetzt, so daß sie bei Erreichen der Packagestellung ungefähr oberhalb des vorderen Fußes 3 angeordnet ist. Der Polsterträger 21 ist bei Erreichen der Packagestellung ungefähr um 90° nach vorne geschwenkt. so daß er etwa parallel zur Lehne 27 ausgerichtet und hinter dieser angeordnet ist.

Die hochgeklappte Packagestellung, die so mit einem einzigen Handgriff und einer geeigneten Kinematik der Bauteile erreicht wurde, wird durch geeignete Sicherungsmittel gesichert, beispielsweise durch die Gasdruckfeder 39. Im Bedarfsfall ist durch Ausklinken des vorderen Fußes 3 der gesamte Fahrzeugsitz 1 aus dem Kraftfahrzeug entfernbar. Die Rückführung in die Sitzstellung erfolgt entsprechend in umgekehrter Reihenfolge, indem der hintere Fuß 5 nach unten gedrückt wird, was eine Schwenkbewegung nach hinten auslöst, also in der Zeichnung im Uhrzeigersinn. Sofern eine Gasdruckfeder 39 vorhanden ist, muß der Fahrzeugsitz 1 gegen deren Kraft zurückgeschwenkt werden. Die Sitzstellung ist erreicht, wenn der hintere Fuß 5 selbsttätig am hinteren Befestigungsbolzen 15 einklinkt.

## Patentansprüche

1. Fahrzeugsitz, insbesondere Kraftfahrzeug-Rücksitzbank,
der wenigstens eine Sitzstellung und wenigstens eine Nichtgebrauchs- oder Packagestellung zur Vergrößerung der Ladefläche einnimmt,
mit einem gelenkigen Sitzgestell (3, 5, 7, 9), welches einen mit einem Sitzpolster (22) versehenen Polsterträger (21) und einen hinteren Fuß (5) aufweist, und
mit einer ein Rückenlehnenpolster (30) aufweisenden Lehne (27),
wobei beim Übergang von der Sitzstellung in die Nichtgebrauchs- oder Packagestellung sich das Sitzgestell (3, 5, 7, 9) in sich bewegt und die Lehne (27) und der Polsterträger (21) sich relativ zueinander bewegen, und
wobei das Bewegen des hinteren Fußes (5) sowohl eine Bewegung des ein erstes Viergelenk aufweisenden Sitzgestells (3, 5, 7, 9) als auch eine Relativbewegung der Lehne (27) und des Polsterträgers (21) bewirkt,
**dadurch gekennzeichnet, daß**
die Lehne (27) mittels eines zweiten Viergelenks (7, 5, 27, 31) am hinteren Fuß (5) des Sitzgestells (3, 5, 7, 9) angelenkt ist und der hintere Fuß (5) einen Bestandteil beider Viergelenke bildet.

2. Fahrzeugsitz nach Anspruch 1, **dadurch gekennzeichnet, daß** durch die Bewegung des hinteren Fußes (5) als Bestandteil des ersten Viergelenks (3, 5, 7, 9) der Polsterträger (21) nach vorne schwenkt.

3. Fahrzeugsitz nach Anspruch 1 oder 2, **dadurch gekennzeichnet, daß** durch die Bewegung des hinteren Fußes (5) als Bestandteil des zweiten Viergelenks (7, 5, 27, 31) die Lehne (27) nach hinten schwenkt.

4. Fahrzeugsitz nach Anspruch 2 und 3, **dadurch gekennzeichnet, daß** die Schwenkbewegung des zweiten Viergelenks (7, 5, 27, 31) die Schwenkbewegung des ersten Viergelenks (3, 5, 7, 9) nahezu ausgleicht, so daß in der Packagestellung der Polsterträger (21) und die Lehne (27) etwa parallel zueinander ausgerichtet sind.

5. Fahrzeugsitz nach Anspruch 4, **dadurch gekennzeichnet, daß** der Ausgleich der Schwenkbewegungen der beiden Viergelenke ein Versetzen der Lehne (27) in Sitzlängsrichtung bewirkt, so daß in der Packagestellung die Lehne (27) mit der vom Rückenlehnenpolster (30) abgewandten Seite am Sitzpolster (22) anliegt.

6. Fahrzeugsitz nach einem der Ansprüche 1 bis 5, **dadurch gekennzeichnet, daß** eine Gasdruckfeder (39) das Bewegen des hinteren Fußes (5) unterstützt.

## Claims

1. A vehicle seat, especially a motor vehicle rear-seat bench, which adopts at least one sitting position and at least one non-use or package position in order to enlarge the loading area, comprising an articulated seat frame (3, 5, 7, 9) which has a cushion carrier (21), provided with a seat cushion (22), and a rear foot (5), and
comprising a backrest (27) having a backrest cushion (30),
wherein, during transfer from the sitting position into the non-use or package position, the seat frame (3, 5, 7, 9) moves into itself, and the backrest (27) and the cushion carrier (21) move relative to each other, and wherein movement of the rear foot (5) causes both a movement of the seat frame (3, 5, 7, 9), which has a first four-bar linkage, and a relative movement of the backrest (27) and the cushion carrier (21),
**characterised in that**
the backrest (27) is articulated to the rear foot (5) of the seat frame (3, 5, 7, 9) by means of a second four-bar linkage (7, 5, 27, 31), and the rear foot (5) forms a component part of both of the four-bar linkages.

2. A vehicle seat according to claim 1, **characterised in that**, by movement of the rear foot (5) as a component part of the first four-bar linkage (3, 5, 7, 9), the cushion carrier (21) pivots forward.

3. A vehicle seat according to claim 1 or 2, **characterised in that**, by movement of the rear foot (5) as a component part of the second four-bar linkage (7, 5, 27, 31), the backrest (27) pivots backward.

4. A vehicle seat according to claims 2 and 3, **characterised in that** the pivoting movement of the second four-bar linkage (7, 5, 27, 31 ) almost equalises the pivoting movement of the first four-bar linkage (3, 5, 7, 9), so that, in the package position, the cushion carrier (21) and the backrest (27) are oriented approximately parallel to each other.

5. A vehicle seat according to claim 4, **characterised in that** the equalising of the pivoting movements of the two four-bar linkages causes the backrest (27) to be displaced in the longitudinal direction of the seat, so that, in the package position, the backrest (27) bears, with the side facing away from the backrest cushion (30), against the seat cushion (22).

6. A vehicle seat according to any one of claims 1 to 5, **characterised in that** a gas-filled compression spring (39) assists movement of the rear foot (5).

## Revendications

1. Siège de véhicule, en particulier banquette arrière de véhicule automobile,
qui prend au moins une position de siège et au moins une position de non utilisation ou en forme de bloc pour augmenter la surface de chargement,
comprenant une carcasse de siège articulée (3, 5, 7, 9), qui présente un support de rembourrage (21) muni d'un rembourrage de siège (22) et un pied arrière (5), et un dossier (27) présentant un rembourrage de dossier (30), la carcasse de siège (3, 5, 7, 9) se déplaçant en elle-même et le dossier (27) et le support de rembourrage (21) se déplaçant relativement l'un par rapport à l'autre lors du passage de la position de siège à la position de non utilisation ou de bloc,
et le déplacement du pied arrière (5) provoquant non seulement un déplacement de la carcasse de siège (3, 5, 7, 9) qui présente une première articulation à quatre points, mais encore un déplacement relatif du dossier (27) et du support de rembourrage (21),
**caractérisé par le fait que**
le dossier (27) est articulé au moyen d'une deuxième articulation à quatre points (7, 5, 27, 31) au pied arrière (5) de la carcasse de siège (3, 5, 7, 9) et **par le fait que** le pied arrière (5) fait partie intégrante des deux articulations à quatre points.

2. Siège de véhicule selon la revendication 1, **caractérisé par le fait que** le support de rembourrage (21) pivote vers l'avant de par le déplacement du pied arrière (5) qui fait partie intégrante de la première articulation à quatre points (3, 5, 7, 9).

3. Siège de véhicule selon l'une des revendications 1 ou 2, **caractérisé par le fait que** le dossier (27) pivote vers l'arrière de par le déplacement du pied arrière (5) qui fait partie intégrante de la deuxième articulation à quatre points (7, 5, 27, 31).

4. Siège de véhicule selon la revendication 2 et la revendication 3, **caractérisé par le fait que** le mouvement de pivotement de la deuxième articulation à quatre points (7, 5, 27, 31) compense pratiquement le mouvement de pivotement de la première articulation à quatre points (3, 5, 7, 9), de façon que le support de rembourrage (21) et le dossier (27) soient orientés à peu près parallèlement l'un à l'autre dans la position en forme de bloc.

5. Siège de véhicule selon la revendication 4, **caractérisé par le fait que** la compensation des mouvements de pivotement des deux articulations à quatre points provoque un déplacement du dossier (27) dans la direction longitudinale du siège, de façon que, dans la position en forme de bloc, le dossier (27) repose contre le rembourrage de siège (22) avec le côté opposé au rembourrage de dossier (30).

6. Siège de véhicule selon l'une des revendications 1 à 5, **caractérisé par le fait qu'**un ressort à pression de gaz (39) assiste le déplacement du pied arrière (5).
